# EUROPEAN PATENT SPECIFICATION

(11) **EP 3 283 428 B1**
(45) Date of publication and mention of the grant of the patent: **03.04.2024**
(21) Application number: 15804346.3
(22) Date of filing: 24.11.2015
(51) Int. Cl.: B66C 13/46, B66C 23/18, F03D 1/00

(54) **TOWER POSITIONING SYSTEM**
TURMPOSITIONIERUNGSSYSTEM
SYSTÈME DE POSITIONNEMENT DE TOUR

(30) Priority: 21.07.2015 EP 15177692
(43) Date of publication of application: 21.02.2018
(73) Proprietor: Siemens Gamesa Renewable Energy A/S, 7330 Brande (DK)
(72) Inventor: JENSEN, Martin, Johan, Smith, 7080 Børkop (DK)
(74) Representative: SGRE-Association
(86) International application number: PCT/EP2015/077407
(87) International publication number: WO 2017/012680

(56) References cited:
- EP-A1- 2 862 832
- EP-A1- 2 865 631
- WO-A1-2014/115472
- WO-A1-2015/022001
- WO-A1-2016/023781
- KR-A- 20140 079 589

## Description

The invention relates to an arrangement to position a part of the tower of a wind turbine to be used during the installation of the tower, and a method to position the part of the tower.

A wind turbine comprises a rotor, a nacelle, and a tower. For the installation of a wind turbine, the parts of the turbine are transported to the installation site. There the parts of the wind turbine are installed and connected. The tower of the wind turbine is placed on a foundation, the nacelle is connected to the tower, and the rotor is attached to the nacelle.

It is known to install wind turbines onshore and offshore. In an onshore installation situation, the tower comprises a flange that is connected to a foundation by bolts and nuts. The foundation is of concrete and steel and is preinstalled on the ground. An offshore foundation comprises a monopile or tripod, for example, that are installed on the sea bed. The foundation may comprise a transition piece, as an installation interface to level the flange connection. The tower comprises a flange that is connected to the foundation by bolts and nuts.

For the installation of the tower, the tower is lifted by a crane and is lowered to be placed on the flange of the foundation. The tower needs to be positioned on the flange of the foundation in a way that the bolt connection can be established.

In some cases electronic equipment, like a transformer of electric cabinets, is present on the foundation of the tower. The tower is then lowered over the equipment so that the equipment covered by the tower and is later based in the tower.

During the installation of the tower, both in an offshore or in an onshore installation situation, the tower needs to be guided onto the foundation and needs to be precisely positioned.

An equal task of positioning the tower arises during the installation of a tower in several parts, when a part of the tower needs to be connected to a lower part already installed.

The tower is lowered by the crane, and workers are surveying the position of the tower, and are guiding the tower into the desired position. Therefore workers are present on the foundation, or close to the tower of the wind turbine.

Personnel are surveying and correcting the position of the tower. The workers are therefore present on the foundation and in the tower. The presence of workers close to or under the tower during the installation of the tower by crane is a safety issue. The tower that is lowered by the crane might shift due to wind or a technical problem and might injure people.

EP2862832A1 describes a tower maneuvering arrangement for bringing a tower assembly into a mounting position relative to a tower mount.

Also EP2865631A1 describes a lifting jig for lifting at least a part of a load.

The aim of the invention is therefore to provide an improved system to install a tower of a wind turbine.

The object of the invention is achieved by the independent claims. Further features of the invention are disclosed in the dependent claims.

An arrangement to position at least a part of a wind turbine tower in respect to a counterpart during installation is disclosed. The arrangement comprises a sensor to sense a position of a part of the tower, means to transmit sensor information to a place in a certain distance from the sensor, means to evaluate the sensor data, and means to influence the position of the part of the tower according to the evaluation of the sensor data.

An arrangement is disclosed to assist during the installation of a wind turbine tower. A wind turbine tower is installed on a foundation, whereby the tower can be installed in one piece or in several parts.

In the case of an onshore installation, the foundation is for example a reinforced concrete foundation.

Thus the counterpart of the part of the tower is a part of the tower, or a foundation, for example.

The wind turbine tower comprises a flange at the lower end. The flange is attached to its counterpart at the foundation by bolts. Therefore, the tower is lifted up by a crane and is positioned on the foundation.

To establish the bolt connection, the tower has to be precisely adjusted to the counterpart. For the adjustment of the part of the tower in respect to the counterpart, the position of the part of the tower needs to be determined and the position of the part of the tower needs to be corrected until the tower is sufficiently adjusted.

Then, the tower is lowered onto the counterpart and the bolt connection between the tower and the foundation can be established.

An arrangement is disclosed to assist in the adjustment of a part of the tower. The arrangement can be attached to the part of the wind turbine tower. The arrangement comprises a sensor to sense a position of a part of the tower.

In addition the arrangement comprises means to transmit sensor information to a place in a certain distance from the sensor.

The arrangement comprises means to evaluate the sensor data and means to influence the position of the part of the tower according to the evaluation of the sensor data.

Thus, the position of the part of the tower can be evaluated from a place in a certain distance from the tower. Thus, no personal needs to be present at the tower or close to the tower during the installation of the part of the tower.

The presence of personal in the area of the tower during the installation of the tower is a safety problem. The tower is of heavy weight and can shift due to wind and crane operation. Thus, the workers in the area of the tower can be influenced by the part of the tower.

A sensor that is attached to the part of the tower can detect the position of the tower. The position of the part of the tower is transmitted to a device in a certain distance from the tower.

There the position of the tower can be evaluated by workers. The position of the tower can then be influenced by means that are attached to the tower and are suitable to influence the position of the part of the tower.

Thus, no workers need to be present to influence the position of the part of the tower in respect to the counterpart. The workers can stay in a safe distance and survey the installation of the tower from the distance.

The sensor comprises attachment means to attach the sensor to the part of the tower.

The sensor comprises a magnet to attach the sensor to the part of the tower magnetically.

The sensor of the arrangement comprises a magnet and the sensor with the magnet can be attached to the part of the tower magnetically in the case of a steel tower.

Thus, the attachment of the sensor can be achieved quite fast and no additional screw holes are needed to attach the sensor.

The sensor is a proximity sensor, an optical sensor, a mechanical sensor or an acoustic sensor.

The sensor of the arrangement needs to be capable to detect the position of the part of the tower in respect to the counterpart. This can be achieved by a proximity sensor detecting the distance between the sensor and a counterpart.

Alternatively an optical sensor can be used. An optical sensor includes all kind of sensors working in the area of visible light.

Alternatively a mechanical sensor with an extension and a switch can be used to detect the proximity of the counterpart in the tower.

An acoustic sensor can be used whereby an acoustic sensor covers all sensors that work with acoustic sounds. Acoustic sensors show the advantage that they also work under the absence of light.

The sensor comprises a camera to produce an image of the positioning situation.

The sensor can in addition comprise a camera that produces a two-dimensional image to visualize the position of the part of the tower in respect to the counterpart during installation, for a better evaluation of the position of the part of the tower. The sensor can also comprise a camera producing a three-dimensional image of the installation situation for an even better evaluation of the installation situation.

The arrangement comprises at least three sensors to sense the position of the part of the tower.

The tower is a cylindrical object, thus it shows a circular cross-cut. The tower needs to be positioned with the circular cross-cut to the foundation. To evaluate the position of the part of the tower an arrangement with three sensors, that are attached to the tower in a distance of around 120 degrees along the circular cross-cut, leads to an optimum of the detection of the position of the part of the tower and a number of sensors needed.

The means to transmit the sensor information is a wireless transmission system.

The signal of the sensor needs to be transmitted to a device to evaluate the position of the part of the tower. This transmission can be done by a cable leading to an opening in the tower, for example a ventilation opening, or the transmission can be done wireless.

A wireless transmission shows the advantage that no cable is needed and the arrangement is the most flexible.

The means to influence the position of the part of the tower comprises a guiding wire prepared to be attached to the tower.

The position of the part of the tower can be influenced by pushing or pulling the part of the tower into the right position.

To pull the part of the tower into the right position a guiding wire can be used. The guiding wire can be attached to the part for the tower and the position of the part of the tower can be stabilized and influenced by the wire.

The position of the part of the tower can be changed by pulling at the wire.

The arrangement comprises a certain number of sensors and the same number of guiding wires.

Thus, every guiding wire is handled according to one sensor signal. Thus, the evaluation of the sensor signals and handling of the guiding wires is the most direct and thus the easiest to perform.

The arrangement comprises three sensors and three guiding wires.

As described above an arrangement with three sensors gives the optimum overview of the position of the part of the tower compared to the number of sensors needed.

The position of the part of the tower can be influenced by three guiding wires, thus every guiding wire is handled according to the evaluation of one sensor signal.

Thus, the handling of the guiding wires is the most direct after evaluation of the sensor signal.

The arrangement comprises means to act on a guiding wire to influence the position of the part of the tower.

The position of the part of the tower can be influenced by pulling at the guiding wire. The force to pull at the guiding wire can come from workers pulling at the guiding wire or workers can handle winches.

Alternatively, the guiding wires can be handled by a motorized winch for example.

Means to act on the guiding wire cover all kind of mechanisms to handle a force needed to pull at the guiding wire and influence the position of the part of the tower.

Thus, controlling the position of the part of the tower is independent from the workers and the force of the workers handling the guiding wire.

A method is disclosed to position at least a part of the wind turbine tower in respect to a counterpart during installation.

The arrangement comprises a sensor, means to transmit sensor information, means to evaluate the sensor information and means to influence the position of the part of the tower.

The method comprises the steps of attaching the sensor to a part of the tower, sensing the position of the part of the tower, transmitting sensor information to a place in a certain distance from the sensor, evaluating the sensor information, influencing the position of the part of the tower according to the evaluation of the sensor data.

Thus, an arrangement as described above can be attached to a tower to sense the position of the part of the tower in respect to a counterpart.

The sensor signal is then transmitted to a place in a certain distance from the sensor, and thus from the tower, and the sensor information is evaluated in the distance.

The position of the part of the tower can be influenced by means that are connected to the tower. The position of the part of the tower is influenced according to the sensor data that is evaluated in the distance from the tower.

Thus, the installation of a part of the tower, especially the positioning of the part of the tower can be performed quicker and safer as no workers need to be present in the vicinity of the tower during the installation.

The sensor comprises a magnet and the method comprises the additional step of attaching the sensor to the part of the tower by magnetic force.

The tower is a steel tower and a sensor with the magnet can be positioned anywhere on the steel tower. Thus, no time is needed to screw the sensor to the tower and no additional attachment means are necessary. Thus the installation of the sensor at the tower can be performed very quickly.

The arrangement comprises a camera and the method comprises the additional steps of generating an image of the positioning situation, transmitting the image taken by the camera and evaluating the image.

For the worker positioning the tower a visual impression is the most direct sensor information possible.

The arrangement comprises a camera and the picture generated by the camera is transmitted to the evaluation unit in a certain distance of the tower.

The image of the camera can thus be evaluated in the distance and no worker has to be present at the tower to get a visual impression of the position of the part of the tower in respect to its counterpart.

The arrangement comprises a guiding wire and the method comprises the additional step of attaching the guiding wire to the part of the tower and influencing the position of the part of the tower by acting on the guiding wire.

A guiding wire is attached to the part of the tower that needs to be positioned. The guiding wire can be attached to the tower by a belt going around the part of the tower. The position of the part of the tower can be influenced by pulling on the guiding wire.

Thus, no worker needs to be present at the tower to influence the position of the part of the tower. The position of the part of the tower can be influenced from the distance.

The invention is shown in more detail by the help of figures. The figures show a preferred configuration and do not limit the scope of the invention.
FIG 1 shows the arrangement as in use at the tower,
FIG 2 shows a second installation situation,
FIG 3 shows a different sensor attached to the tower,
FIG 4 shows a birds-eye view on the installation situation.

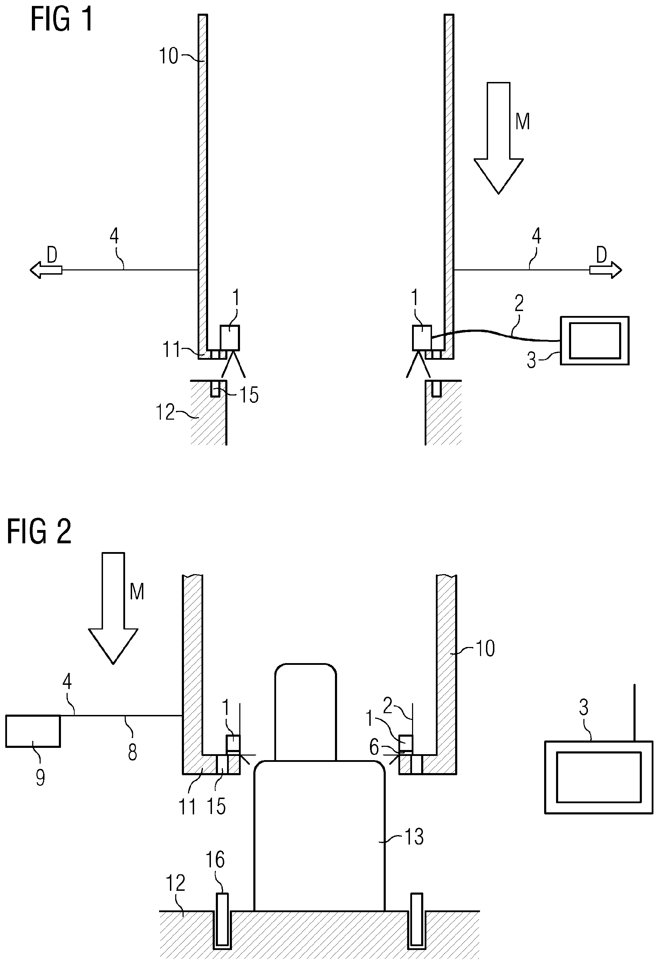

Figure 1 shows the arrangement that is installed at the tower.

The arrangement comprises a sensor 1. The sensor 1 can be a mechanical sensor, optical sensor, acoustic sensor for example.

The part of the tower 10 comprises a flange 11 at the lower end. The flange 11 needs to be connected to a foundation 12 whereby the bolt holes and the flange 11 of the part of the tower 10 need to be aligned with the bolt holes 15 and the foundation 12.

The sensor 1 senses the position of the part of the tower 10 in respect to the foundation 12.

The signal of the sensor 1 is transmitted by means 2 to transmit the sensor signal to an evaluation unit 3. The signal of the sensor 1 and thus the position of the part of the tower 10 can be an evaluated with the means 3 to evaluate the position in certain distance from the tower.

The tower is lowered onto the foundation in a mounting direction M.

After the position of the tower is evaluated the position of the tower can be influenced by means 4 to influence the position of the tower. The position of the tower can be influenced in the directions D.

Thus, no worker needs to be present at the tower or in the tower, to visually survey the positioning of the tower, and no worker needs to be present close to the tower to influence the position of the tower, during the installation of the tower on the foundation.

Figure 2 shows a second installation situation.

The part of the tower 10 is installed on the foundation 12. The part of the tower 10 comprises a flange 11 with a bolt hole 15. The foundation 12 comprises bolts 16 and the part of the tower 10 needs to be aligned with its bolt holes 15 to fit to the position of the bolts 16.

An electrical cabinet 13 is present on the foundation 12 and the part of the tower 10 is installed on the foundation 12 over the electrical cabinet 13 in a way that the electrical cabinet 13 is positioned within the part of the tower 10 after the installation of the part of the tower 10 to the foundation 12.

Thus, during the installation of the part of the tower 10 a special care has to be taken that the electrical cabinet is not damaged by the part of the tower 10 and the flange 11.

Thus, the arrangement to position the tower is used. Sensors 1 are connected by a magnet 6 to the flange 11 of the part of the tower 10. The sensors 1 sense the position of the tower in respect to the electrical cabinet 13 and in respect to the bolts 16 of the foundation 12.

The arrangement comprises means 2 to transmit the sensor signal to an evaluation unit. The means 2 to transmit the sensor signal are wireless connection means.

The means 3 to evaluate the sensor signal receives the information from the sensor 1. After the evaluation of the position of the tower, the position of the tower can be influenced by means 4 to influence the position.

The means 4 comprises guiding wires 8 that can be handled by means 9 to act on a guiding wire. The tower is lowered onto the foundation in a mounting direction M. During lowering of the tower the position of the tower can be influenced by the means 9 acting on a guiding wire 8.

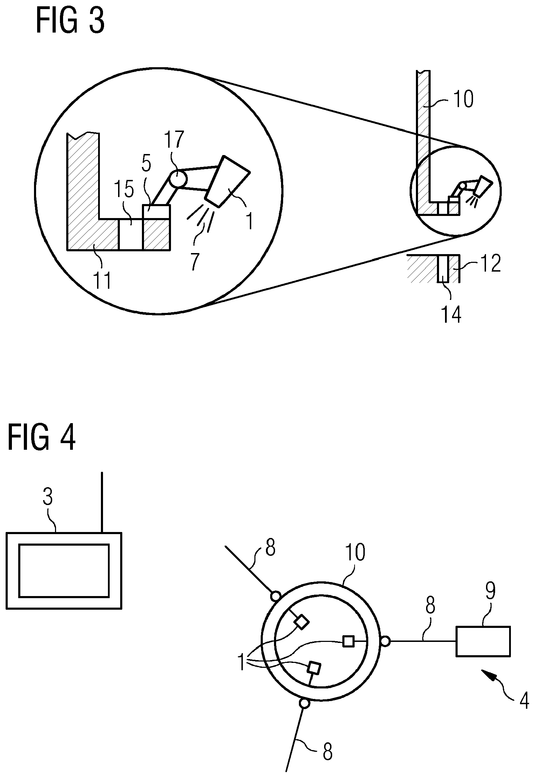

Figure 3 shows a different sensor attached to the tower.

The part of the tower 10 comprises a flange 11 with bolt holes 15. The part of the tower 10 is installed on a foundation 12 that comprises a flange 14. For an adjustment of the position of the part of the tower 10 in respect to the counterpart 12, a sensor is attached to the part of the tower 10.

The sensor 1 is a visual sensor with a camera 7. The camera 7 creates an image of the installation situation of the tower and the counterpart.

The camera is attached to the tower by attachment means 5. The camera comprises a moveable joint so that the camera 7 at the sensor 1 can be adjusted in its position.

Preferably, the moveable joint and thus the position of the camera 7 at the sensor 1 can be adjusted by a remote control and by a motor at the joint 17.

Figure 4 shows a birds-eye view on the installation situation.

The part of the tower 10 shows a circular cross-cut. Sensors 1 are installed within the tower.

At the outside of the tower guiding wires 8 are attached to the tower to influence the position of the tower. The means to position the influence of the tower comprises the guiding wire and means 9 to act on the guiding wire.

The signals of the sensors 1 are transferred to the means 3 to evaluate the position of the tower. The position of the tower can then be influenced by pulling on the guide wires 8.

The arrangement comprises three sensors 1 and three guide wires 8. The guiding wires 8 are attached to the tower in a distance of around 120 degrees along the circular cross-cut of the tower.

Thus, the position of the tower can be precisely defined through three wires, and three wires is the minimum number needed to precisely define the position of the tower.

For every guiding wire 8 one sensor 1 is needed. Thus, a direct relation exists between the sensor signal 1 and the guiding wire 8. Thus the handling of the positioning of the tower is simplified.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Ensemble comprising a part of a wind turbine tower, a counterpart and an arrangement to position the part of the wind turbine tower in respect to the counterpart during installation, the arrangement comprising
- a sensor (1) to sense a position of the part of the tower,
- means (2) to transmit sensor information to a place in a certain distance from the sensor (1),
- means (3) to evaluate the sensor data, and
- means (4) to influence the position of the part of the tower in respect to the counterpart according to the evaluation of the sensor data,
wherein the sensor (1) comprises a magnet (6) to attach the sensor (1) to the part of the tower magnetically.

2. Ensemble according f to claim 1, **characterized in that** the sensor (1) is a proximity sensor, an optical sensor, a mechanical sensor or an acoustic sensor.

3. Ensemble according to one or the preceding claims, **characterized in that** the sensor (1) comprises a camera (7) to produce an image of the positioning situation.

4. Ensemble according to one or the preceding claims, **characterized in that** the arrangement comprises at least three sensors (1) to sense the position of the part of the tower.

5. Ensemble according to one or the preceding claims, **characterized in that** the means (2) to transmit the sensor information is a wireless transmission system (8).

6. Ensemble according to one or the preceding claims, **characterized in that** the means (4) to influence the position of the part of the tower comprises a guiding wire (8) attached to the part of the tower.

7. Ensemble according claim 6, **characterized in that** the arrangement comprises a certain number of sensors (1) and the same number of guiding wires (8).

8. Ensemble according claim 7, **characterized in that** the arrangement comprises three sensors (1) and three guiding wires (8).

9. Ensemble according to claim 6, **characterized in that** the arrangement comprises means (9) to act on the guiding wire to influence the position of the part of the tower.

10. Method to position at least a part of a wind turbine tower (10) in respect to a counterpart during installation by help of an arrangement, whereby the arrangement comprises a sensor (1), means (2) to transmit sensor information, means (3) to evaluate the sensor information, and means (4) to influence the position of the part of the tower (10), wherein the sensor (1) comprises a magnet (6) to attach the sensor (1) to the part of the tower (10) magnetically,
comprising the steps of
- attaching the sensor (1) to a part of the tower (10),
- sensing the position of the part of the tower (10),
- transmitting sensor information to a place in a certain distance from the sensor (1),
- evaluating the sensor information,
- influencing the position of the part of the tower according to the evaluation of the sensor data.

11. Method according to claim 10, whereby the sensor (1) comprises the magnet (6), comprising the step of attaching the sensor (1) to the part of the tower (10) by magnetic force.

12. Method according to claim 10, whereby the arrangement comprises a camera (7), comprising the steps of
- generating an image of the positioning situation,
- transmitting the image taken by the camera (7), and
- evaluating the image.

13. Method according to claim 10, whereby the arrangement comprises a guiding wire (8), comprising the step of
- attaching the guiding wire (8) to the part of the tower (10), and
- influencing the position of the part of the tower (10) by acting on the guiding wire (8).

## Patentansprüche

1. Baugruppe, die einen Teil eines Windturbinenturms, ein Gegenstück und eine Anordnung zum Positionieren des Teils des Windturbinenturms mit Bezug auf das Gegenstück während einer Installation umfasst, wobei die Anordnung Folgendes umfasst:
- einen Sensor (1) zum Erfassen einer Position des Teils des Turms,
- eine Einrichtung (2) zum Übertragen von Sensorinformationen an einen Ort in einem bestimmten Abstand zu dem Sensor (1),
- eine Einrichtung (3) zum Bewerten der Sensordaten und
- eine Einrichtung (4) zum Beeinflussen der Position des Teils des Turms mit Bezug auf das Gegenstück in Abhängigkeit von der Bewertung der Sensordaten,
wobei der Sensor (1) einen Magnet (6) zum magnetischen Befestigen des Sensors (1) an dem Teil des Turms umfasst.

2. Baugruppe nach Anspruch 1, **dadurch gekennzeichnet, dass** der Sensor (1) ein Näherungssensor, ein optischer Sensor, ein mechanischer Sensor oder ein akustischer Sensor ist.

3. Baugruppe nach einem der vorhergehenden Ansprüche, **dadurch gekennzeichnet, dass** der Sensor (1) eine Kamera (7) zum Erzeugen eines Bilds der Positionierungssituation umfasst.

4. Baugruppe nach einem der vorhergehenden Ansprüche, **dadurch gekennzeichnet, dass** die Anordnung mindestens drei Sensoren (1) zum Erfassen der Position des Teils des Turms umfasst.

5. Baugruppe nach einem der vorhergehenden Ansprüche, **dadurch gekennzeichnet, dass** die Einrichtung (2) zum Übertragen der Sensorinformationen ein Drahtlosübertragungssystem (8) ist.

6. Baugruppe nach einem der vorhergehenden Ansprüche, **dadurch gekennzeichnet, dass** die Einrichtung (4) zum Beeinflussen der Position des Teils des Turms einen an dem Teil des Turms befestigten Führungsdraht (8) umfasst.

7. Baugruppe nach Anspruch 6, **dadurch gekennzeichnet, dass** die Anordnung eine bestimmte Anzahl von Sensoren (1) und dieselbe Anzahl von Führungsdrähten (8) umfasst.

8. Baugruppe nach Anspruch 7, **dadurch gekennzeichnet, dass** die Anordnung drei Sensoren (1) und drei Führungsdrähte (8) umfasst.

9. Baugruppe nach Anspruch 6, **dadurch gekennzeichnet, dass** die Anordnung eine Einrichtung (9) zum Einwirken auf den Führungsdraht, um die Position des Teils des Turms zu beeinflussen, umfasst.

10. Verfahren zum Positionieren mindestens eines Teils eines Windturbinenturms (10) mit Bezug auf ein Gegenstück während einer Installation mithilfe einer Anordnung, wobei die Anordnung einen Sensor (1), eine Einrichtung (2) zum Übertragen von Sensorinformationen, eine Einrichtung (3) zum Bewerten der Sensorinformationen und eine Einrichtung (4) zum Beeinflussen der Position des Teils des Turms (10) umfasst, wobei der Sensor (1) einen Magnet (6) zum magnetischen Befestigen des Sensors (1) an dem Teil des Turms (10) umfasst,
umfassend die folgenden Schritte:
- Befestigen des Sensors (1) an einem Teil des Turms (10),
- Erfassen der Position des Teils des Turms (10),
- Übertragen von Sensorinformationen an einen Ort in einem bestimmten Abstand zu dem Sensor (1),
- Bewerten der Sensorinformationen,
- Beeinflussen der Position des Teils des Turms in Abhängigkeit von der Bewertung der Sensordaten.

11. Verfahren nach Anspruch 10, wobei der Sensor (1) den Magnet (6) umfasst, umfassend den Schritt des Befestigens des Sensors (1) an dem Teil des Turms (10) durch Magnetkraft.

12. Verfahren nach Anspruch 10, wobei die Anordnung eine Kamera (7) umfasst, umfassend die folgenden Schritte:
- Generieren eines Bilds der Positionierungssituation,
- Übertragen des durch die Kamera (7) aufgenommenen Bilds und
- Bewerten des Bilds.

13. Verfahren nach Anspruch 10, wobei die Anordnung einen Führungsdraht (8) umfasst, umfassend den folgenden Schritt:
- Befestigen des Führungsdrahts (8) an dem Teil des Turms (10) und
- Beeinflussen der Position des Teils des Turms (10) durch Einwirken auf den Führungsdraht (8).

## Revendications

1. Ensemble comprenant une partie d'une tour d'éolienne, une contrepartie et un agencement pour positionner la partie de la tour d'éolienne par rapport à la contrepartie lors de l'installation, l'agencement comprenant
- un capteur (1) pour détecter une position de la partie de la tour,
- un moyen (2) pour transmettre les informations de capteur à un endroit situé à une certaine distance du capteur (1),
- un moyen (3) pour évaluer les données de capteur, et
- un moyen (4) pour influencer la position de la partie de la tour par rapport à la contrepartie en fonction de l'évaluation des données de capteur,
dans lequel le capteur (1) comprend un aimant (6) pour fixer magnétiquement le capteur (1) à la partie de la tour.

2. Ensemble selon la revendication 1, **caractérisé en ce que** le capteur (1) est un capteur de proximité, un capteur optique, un capteur mécanique ou un capteur acoustique.

3. Ensemble selon l'une ou les revendications précédentes, **caractérisé en ce que** le capteur (1) comprend une caméra (7) pour produire une image de la situation de positionnement.

4. Ensemble selon l'une ou les revendications précédentes, **caractérisé en ce que** l'agencement comprend au moins trois capteurs (1) pour détecter la position de la partie de la tour.

5. Ensemble selon l'une ou les revendications précédentes, **caractérisé en ce que** le moyen (2) pour transmettre les informations de capteur est un système de transmission sans fil (8).

6. Ensemble selon l'une ou les revendications précédentes, **caractérisé en ce que** le moyen (4) pour influencer la position de la partie de la tour comprend un fil de guidage (8) fixé à la partie de la tour.

7. Ensemble selon la revendication 6, **caractérisé en ce que** l'agencement comprend un certain nombre de capteurs (1) et le même nombre de fils de guidage (8).

8. Ensemble selon la revendication 7, **caractérisé en ce que** l'agencement comprend trois capteurs (1) et trois fils de guidage (8).

9. Ensemble selon la revendication 6, **caractérisé en ce que** l'agencement comprend un moyen (9) pour agir sur le fil de guidage pour influencer la position de la partie de la tour.

10. Procédé pour positionner au moins une partie d'une tour d'éolienne (10) par rapport à une contrepartie lors de l'installation à l'aide d'un agencement, lorsque l'agencement comprend un capteur (1), un moyen (2) pour transmettre des informations de capteur, un moyen (3) pour évaluer les informations de capteur, et un moyen (4) pour influencer la position de la partie de la tour (10), dans lequel le capteur (1) comprend un aimant (6) pour fixer magnétiquement le capteur (1) à la partie de la tour (10), comprenant les étapes de
- fixation du capteur (1) à une partie de la tour (10),
- détection de la position de la partie de la tour (10),
- transmission des informations de capteur à un endroit situé à une certaine distance du capteur (1),
- évaluation des informations de capteur,
- influence de la position de la partie de la tour en fonction de l'évaluation des données de capteur.

11. Procédé selon la revendication 10, lorsque le capteur (1) comprend l'aimant (6), comprenant l'étape de fixation du capteur (1) à la partie de la tour (10) par force magnétique.

12. Procédé selon la revendication 10, lorsque l'agencement comprend une caméra (7), comprenant les étapes de :
- génération d'une image de la situation de positionnement,
- transmission de l'image prise par la caméra (7), et
- évaluation de l'image.

13. Procédé selon la revendication 10, lorsque l'agencement comprend un fil de guidage (8), comprenant l'étape de
- fixation du fil de guidage (8) à la partie de la tour (10), et
- influence de la position de la partie de la tour (10) en agissant sur le fil de guidage (8).
